# EUROPÄISCHE PATENTSCHRIFT

(11) **EP 2 228 250 B1**
(45) Veröffentlichungstag und Bekanntmachung des Hinweises auf die Patenterteilung: **25.07.2018**
(21) Anmeldenummer: 09178901.6
(22) Anmeldetag: 11.12.2009
(51) Int. Cl.: B60L 1/02, F01M 5/02, F01M 5/00, H02J 7/14, B60L 7/10

(54) **Energiemanagement eines Kraftfahrzeuges**
Energy managemet of a vehicle
Gestion de l'énergie d'un véhicule

(30) Priorität: 18.02.2009 DE 102009000981
(43) Veröffentlichungstag der Anmeldung: 15.09.2010
(73) Patentinhaber: Ford Global Technologies, LLC, Dearborn, MI 48126 (US)
(72) Erfinder: Bartsch, Leonhard, 52074 Aachen (DE); Mehring, Jan, 50668 Köln (DE); Hecke, Ralf, 52064 Aachen (DE); Quix, Hans Günter, 52134 Herzogenrath (DE)
(74) Vertreter: Illing, Rolf

(56) Entgegenhaltungen:
- DE-A1-102006 001 201
- JP-A- 2006 174 543
- US-A- 3 798 072
- US-B1- 6 655 342

## Beschreibung

Die Erfindung betrifft ein Energiemanagement-Verfahren zur Verkürzung der Warmlaufphase eines Verbrennungsmotors eines Kraftfahrzeuges, das einen Verbrennungsmotor, einen Energiespeicher, und einen Generator sowie Stromverbraucher aufweist, wobei der Generator in Rekuperationsphasen kinetische Energie und/oder Bremsenergie des Kraftfahrzeuges in elektrische Energie umwandelt, welche in den Energiespeicher speicherbar ist.

Die US 6,665,342 B1 befasst sich mit einem Vorschmiersystem. Damit soll der Verschleiß von LKW-Motoren vermindert werden, indem der Motor vor seinem Start vorgeschmiert wird. Das Vorschmiersystem kann auch aktiv sein, wenn der Motor bei extrem kalten Wetterbedingungen betrieben wird. Es kann ein Aufwärmsystem vorgesehen werden, jedoch ist diese nur dann aktiv, wenn der Motor ausgeschaltet ist. Es wird auf ein Batterieladesystem hingewiesen. Auch dieses ist jedoch nur dann aktiv, wenn der Motor aus ist. Öl wird mittels der in der Ölwanne angeordneten Heizpfanne für eine vorbestimmte Zeit erwärmt, wenn der Motor aus ist, wobei das Aufladen der Batterie über die externe Energiequelle ebenfalls nur bei ausgeschaltetem durchgeführt werden darf.

Die DE 10 2006 001 201 B4 offenbart ein Verfahren zum Steuern eines Batterieladevorgangs einer Batterie eines Kraftfahrzeugs. Mittels eines Generators wird in Rekuperationsphasen kinetische Energie und/oder Bremsenergie in elektrische Energie umgewandelt, und in der Batterie gespeichert. Ein SOC-Level (State of Charge) der Batterie wird dabei zwischen zwei Grenzwerten gehalten. Ein SOC-Soll-Level wird an den geflossenen Ladestrom derart durch einen Bremsvorgang angepaßt, dass, wenn ein voran gegangener Bremsvorgang eine hohe Ladungsmenge ergeben hat, die Ladungsmenge einer vorliegenden Rekuperationsphase geringer ausfällt und umgekehrt. Dieses Verfahren hat sich in der Praxis dahin gehend bewährt, als eine hohe Kraftstoffersparnis ermöglicht wird, ohne die Lebensdauer der Batterie zu verringern.

Die JP 2006-174543 A) gibt dem Fachmann ebenfalls lediglich die Lehre der Energierückgewinnung an die Hand. Zwar wird auch offenbart, dass eine Wärmequelle das Öl oder einen Katalysator aufwärmen könnte. Jedoch soll dies jeweils nur mit einem Energieüberschuss der rückgewonnen Energie geschehen.

In der US 3,798,072 wird eine Heizeinheit für den Öl-Tauchstab des Ölsystems des Motors eines Kraftfahrzeugs thematisiert, die über einen thermostatisch gesteuerten Schalter mit einer Hilfsbatterie elektrisch verbunden ist. Die Heizeinheit erwärmt das Öl, wenn die Temperatur unter einen vorbestimmten Wert sinkt.

Grundsätzlich ist es bekannt, die Effektivität moderner Verbrennungsmotoren mit geeigneten Mitteln zu verbessern, wobei gleichzeitig der Kraftstoffverbrauch reduziert wird. Hierbei können Maßnahmen wie zum Beispiel die Reduzierung von Reibungsverlusten, optimierte Verbrennungssysteme und/oder Stop/Start Eigenschaften der Verbrennungsmotoren installiert werden, um den Kraftstoffverbrauch weiter zu senken. Nachteilig bei diesen Maßnahmen ist aber, dass die Aufwärmphase des Verbrennungsmotors im Vergleich zu konventionellen Verbrennungsmotoren verlängert wird, denn der Motor kann zum Beispiel bei Stillstand des Kraftfahrzeuges automatisch ausgeschaltet werden, ohne dass die Aufwärmphase abgeschlossen ist, um bei einem Anfahrsignal wieder angeschaltet zu werden (Stop/Start). Kalte Verbrennungsmotoren weisen aber hohe Reibwerte auf, was auf die geringe Viskosität der verwendeten Öle zurück zu führen ist. Von daher wirkt sich eine verlängerte Aufwärmphase nachteilig auf die erzielbaren Kraftstoffersparnisse aus, denn hohe Reibung verursacht auch direkt einen erhöhten Kraftstoffverbrauch. Um die Aufwärmphase verkürzen zu können, könnten daher zusätzliche Maßnahmen getroffen werden, welche die Betriebsflüssigkeiten des Verbrennungsmotors zusätzlich erwärmen. Hierzu können thermische Managementsysteme vorgesehen werden, welche die notwendige Wärme erzeugen und/oder handhaben. Beispielsweise könnte die mittels des Verbrennungsmotors erzeugte Wärme Vorrichtungen zugeführt werden, welche die erhaltene Wärme an Motoröl oder an Kühlflüssigkeit abgibt, um diese Betriebsmedien trotz des möglicherweise (kurzfristig) abgeschalteten Verbrennungsmotors aufzuwärmen, so dass die Aufwärmphase schneller abgeschlossen werden kann. Natürlich wirkt sich der relativ schnelle Abschluß der Aufwärmphase auch auf den Fahrkomfort aus, denn beispielsweise die Kabinenheizung kann so den Innenraum schneller aufwärmen.

Die DE 33 90 405 T1 betrifft eine Vorrichtung zur Verbesserung des Anlassens bei Kälte auch unter arktischen Bedingungen eines Verbrennungsmotors, welche in dem Schmierölsystem des Motors angeordnet ist. Die Vorrichtung umfasst eine Kammer mit Einlass- und Ablassrohren und ein Heizelement. Die Kammer steht in unmittelbarer Verbindung mit den Ölleitungen des Motors, wie z.B. der Hauptölleitung.

Die DE 103 32 497 A1 offenbart ein Verfahren zur Verkürzung der Warmlaufphase eines Kraftfahrzeuges. Ein Verbrennungsmotor weist ein Getriebe und zugeordnete Ölkreisläufe, sowie ein zugeordnetes, elektrisches Bordnetz, bestehend aus Starter, Generator und Speicher auf. Die Ölkreisläufe werden mit aus dem Bordnetz entnommener, elektrischer Energie beheizt.

In der DE 10 2005 062 338 A1 wird eine Vorrichtung zur Vorwärmung von Kühlmittel-und Ölkreisläufen offenbart, wobei jeweils ein Abschnitt der das Kühlmittel oder Öl führenden Leitungen durch eine Baugruppe geführt wird, der ein elektrisches Heizelement zugeordnet ist. Die Vorrichtung ist als Wärmetauscher ausgestaltet, durch den eine Kühlmittel- und/oder eine Ölleitung geführt ist. Dem Wärmetauscher ist ein Heizelement zugeordnet, welches in einem am Grundkörper des Wärmetauschers angeordneten Rohrstutzen abgestützt ist und im freien Bauraum innerhalb des Wärmetauschers mit dem jeweils separat geführten Kühlmittel und/oder Öl in Wirkverbindung steht.

Der Erfindung liegt die Aufgabe zugrunde, ein Energiemanagement für Kraftfahrzeuge der Eingangs genannten Art anzugeben mit dem die Vorteile der Energierückgewinnung aus kinetischer Energie und/oder aus Bremsenergie mit denen des thermischen Energiemanagementsystems des Kraftfahrzeuges vereinbar sind.

Erfindungsgemäß wird die Aufgabe mit einem Energiemanagement-Verfahren zur Verkürzung der Warmlaufphase eines Verbrennungsmotors eines Kraftfahrzeuges gelöst, wobei das Kraftfahrzeug einen Energiespeicher, und einen Generator sowie Stromverbraucher aufweist, wobei der Generator vom Verbrennungsmotor angetrieben wird und ferner in Rekuperationsphasen kinetische Energie und/oder Bremsenergie des Kraftfahrzeuges in elektrische Energie umwandelt, die in dem Energiespeicher speicherbar ist, wobei zumindest ein Heizelement für Betriebsmedien des Verbrennungsmotors in das Energiemanagement-Verfahren eingebunden ist, wobei in der Warmlaufphase des Verbrennungsmotors das zumindest eine Heizelement zum Aufwärmen der Betriebsmedien in einer ersten Phase zunächst mit Energie aus dem Energiespeicher versorgt wird, wobei in der ersten Phase ein Differenzbetrag an Energie aus dem Energiespeicher entnommen wird, wobei die erste Phase beendet wird, wenn eine tatsächliche Temperatur der Betriebsmedien einen minimalen Grenzwert der Betriebsmediumtemperatur aufweist, oder wenn ein tatsächlicher Ladezustand des Energiespeichers einen Betrag unterhalb eines festgelegten Grenzwertes aufweist, oder wenn der aktiv aus dem Energiespeicher entnommene Differenzbetrag an Energie einen Betrag oberhalb eines festgelegten Grenzdifferenzenergiebetrages aufweist, wobei sich an die beendete erste Phase eine zweite Phase anschließt, in welcher die aktive Entnahme von Energie aus dem Energiespeicher unterbunden wird, und wobei in während der zweiten Phase auftretenden Rekuperationsphasen die Generatorspannung angehoben wird, und der Energiespeicher geladen wird, bis der aus dem Energiespeicher während der ersten Phase entnommene Differenzbetrag durch die in den Rekuperationsphasen rückgewonnene Energie wieder in den Energiespeicher geladen ist, wobei das zumindest eine Heizelement in der zweiten Phase mit Energie des Generators versorgt wird, wenn die Betriebsmediumtemperatur einen Betrag unterhalb einer maximalen Betriebsmediumtemperatur aufweist, und wobei der Generator die Stromverbraucher ständig mit Energie versorgt, und wobei das zumindest eine elektrische Heizelement abgeschaltet wird, wenn maximale Grenztemperaturen der Betriebsmedien erreicht sind.

Es werden elektrische Heizelemente für Betriebsmedien vorgesehen, die direkt an dem Generator und dem Energiespeicher jeweils abschaltbar angeschlossen sind, und die in einer ersten Phase zunächst, wenn festgelegte Basiswerte erkannt werden, mit Energie aus dem Energiespeicher versorgt werden, wobei ein Differenzbetrag aus dem Energiespeicher entnommen wird, der in der Rekuperationsphase durch eine Anhebung der Generatorspannung in den Energiespeicher geladen wird, bis der entnommen Differenzbetrag durch die in der Rekuperationsphase rück gewonnene Energie in den Energiespeicher geladen ist, wobei der Generator die Stromverbraucher ständig mit Energie versorgt, und wobei die elektrischen Heizelemente abgeschaltet werden, wenn Schwellwerte der Betriebsmedien erreicht sind.

Mit der Erfindung wird vorteilhaft ein Weg aufgezeigt, bei dem elektrische Heizvorrichtungen vorgesehen sind, welche zum Beispiel das Motoröl und/oder das Getriebeöl und/oder die Kühlflüssigkeit aufheizen können. Die Heizenergie zum Versorgen der Stromverbraucher wird dabei zunächst aus dem Energiespeicher entnommen wobei die aus dem Energiespeicher entnommene Energie in Rekuperationsphasen in den Energiespeicher geladen wird. Hierbei wird die kinetische Energie (z. B. Gas wegnehmen) und/oder Bremsenergie direkt in elektrischen Strom umgewandelt.

Die Energierückgewinnung aus kinetischer Energie und/oder aus der Bremsenergie ist grundsätzlich bekannt, wobei die rück gewonnene Energie bisher direkt in den Energiespeicher bzw. in die Batterie geladen wurde. Die Ladeakzeptanz der Batterie ist jedoch begrenzt, so dass weniger Energie gespeichert werden kann, als durch Rekuperation zur Verfügung steht. Genau hier greift die Erfindung an, indem zunächst ein bestimmter Energiebetrag aus dem Energiespeicher zur Versorgung der Heizelemente entnommen wird. Durch die Einwirkung der Heizelemente wird das betreffende Betriebsmedium, z. B. das Motoröl bereits erwärmt. In Rekuperationsphasen wird die Spannung des Generators erhöht. In dieser Phase werden die Stromverbraucher und die Heizelemente nur über den Generator mit elektrischer Energie versorgt. Gleichzeitig wird zumindest ein Teilbetrag des entnommenen Differenzbetrages über den Generator in den Energiespeicher geladen.

Die Heizelemente werden nur so lange mit Energie versorgt, bis die maximale Grenztemperatur des Betriebsmediums (Basiswert), z. B. des Motoröls erreicht ist. Von daher ist vorteilhaft vorgesehen, dass wenn die maximale Grenztemperatur des Betriebsmediums erreicht ist, die Heizelemente abgeschaltet, und nicht mehr mit Strom versorgt werden. Von nun an wird die Generatorspannung so geregelt, dass der Batteriestrom zu Null wird und nur in den Rekuperationsphasen positiv wird. Diese Nullstromregelung ist solange aktiv, bis die vorher durch die Heizelemente entnommene Ladungsmenge wieder vollständig nachgeladen ist.

Mit dem erfindungsgemäßen Energiemanagement-Verfahren wird vorteilhaft die Warmlaufphase ohne Einsatz zusätzlicher Energie, die aus dem Kraftstoff erzeugt werden muß verkürzt. Hierzu wird zunächst Energie aus der Batterie entnommen. Die entnommene Energie wird in Rekuperationsphasen durch Umwandlung kinetischer Energie und/oder der Bremsenergie in die Batterie zurück geladen. Insofern wird das Verkürzen der Warmlaufphase des Verbrennungsmotors in einfacher Weise erreicht, indem in Rekuperationsphasen aus kinetischer Energie und/oder Bremsenergie rück gewonnene Energie genutzt wird.

In weiter vorteilhafter Ausgestaltung sind zum Erwärmen des jeweils betreffenden Betriebsmediums zwei Heizelemente mit jeweils unterschiedlicher Leistung vorgesehen. Eines der Heizelemente hat eine geringere Leistung als das andere.

Günstig ist, wenn das Heizelement mit der niedrigeren Leistung kontinuierlich betrieben wird, wobei das andere Heizelement mit der höheren Leistung nur in Rekuperationsphasen betrieben wird. Durch diese Maßnahme wird die Warmlaufphase weiter verkürzt. Vorzugsweise wird das Heizelement mit der geringeren Leistung zunächst kontinuierlich aus der Batterie versorgt, die dann wie oben beschrieben, in den Rekuperationsphasen nachgeladen wird. Das Heizelement mit der höheren Leistung wird nur in den Rekuperationsphasen zugeschaltet.

Dabei sind zwei bzw. optional drei Phasen vorgesehen, und zwar eine erste Phase, welche als aktive Phase bezeichnet werden kann, eine sich daran anschließende zweite Phase, welche als Nachladephase bezeichnet werden kann, und optional eine dritte Phase welche als Heizphase bezeichnet werden kann. In der ersten Phase ist vorgesehen, mittels dem zumindest einem Heizelement das Betriebsmedium aufzuwärmen, wobei das zumindest eine Heizelement durch eine aktive Entnahme von gespeicherter Energie aus dem Energiespeicher mit Energie versorgt wird. Tritt in dieser ersten Phase eine Rekuperationsphase auf, wird die Generatorspannung erhöht, und das optional zweite Heizelement wird zugeschaltet, allerdings wird das optional zweite Heizelement über den Generator mit Strom versorgt wird, wobei auch die Batterie bzw. der Energiespeicher geladen wird. Die erste Phase oder aktive Phase, in welcher aktiv Energie aus dem Energiespeicher entnommen wird, wird gemäß der Erfindung beendet wenn die tatsächliche Betriebsmediumtemperatur einen minimalen Grenzwert der Betriebsmediumtemperatur aufweist, oder wenn der tatsächliche Ladezustand des Energiespeichers einen Betrag unterhalb des festlegbaren Grenzwertes aufweist, oder wenn die aktiv aus dem Energiespeicher entnommene Differenzenergie einen Betrag oberhalb des festlegbaren Grenzdifferenzenergiebetrags aufweist.

Ist die erste Phase beendet, schließt sich die zweite Phase an, in welcher die Generatorspannung so geregelt wird, dass der Batteriestrom zu NULL wird. In der zweiten Phase wird die aktive Entnahme von Energie aus der Batterie bzw. aus dem Energiespeicher unterbunden. In während der zweiten Phase auftretenden Rekuperationsphasen wird die Generatorspannung angehoben, wobei das erste und das optional zweite Heizelement mit Energie versorgt werden, wenn die tatsächliche Betriebsmediumtemperatur einen Betrag unterhalb der maximalen Betriebsmediumtemperatur aufweist. Die Batterie bzw. der Energiespeicher wird geladen. Die zweite Phase bzw. Ladephase ist gemäß der Erfindung solange aktiv bis der während der aktiven Phase entnommene Differenzenergiebetrag wieder in den Energiespeicher geladen ist. Weist die tatsächliche Betriebsmediumtemperatur einen Betrag gleich oder oberhalb der maximalen Betriebsmediumtemperatur auf, wird in der zweiten Phase nur die Batterie bzw. der Energiespeicher geladen, wenn eine Rekuperationsphase vorliegt.

An die zweite Phase schließt sich optional die dritte Phase an. Sollte die Ladungsmenge in der zweiten Phase ausgeglichen sein, die tatsächliche Betriebsmediumtemperatur jedoch einen Betrag unterhalb der maximalen Betriebstemperatur aufweisen, wird die dritte Phase durchgeführt. In dieser werden das erste und das optional zweite Heizelement lediglich in einer Rekuperationsphase zugeschaltet, welche nur in den Rekuperationsphasen mit Energie über den Generator versorgt werden. Insofern liegt in der dritten Phase eine normale (übergeordnete) Ladestrategie vor, wobei nicht zwangsläufig eine Null Stromregelung vorgeschrieben ist.

In günstiger Ausgestaltung ist vorgesehen, dass die Heizelemente zur Erwärmung von Öl ausgeführt sind. Insofern können die Heizelemente mittels der zusätzlich frei werdende Energie z.B: während negativer Beschleunigungsphasen beispielsweise Motoröl und/oder Getriebeöl bzw. Achsgetriebeöl aufwärmen. Zweckmäßig ist, wenn die Heizelemente in dem Ölkreislauf bzw. direkt in dem Ölkreislauf des Verbrennungsmotors integriert sind, um so Wärmeverluste zu reduzieren. Denkbar ist, das Heizelement bzw. die Heizelemente z.B. an einem Ölansaugrohr, an dem Ölpumpengehäuse und/oder an möglichen Ölpassagen zwischen der Ölpumpe, dem Ölfilter, dem Ölkühler und der Hauptölgalerie anzuordnen. In bevorzugter Ausführung kann vorgesehen sein, das bzw. die Heizelemente in Strömungsrichtung des Öls gesehen hinter dem Ölkühler anzuordnen, um Wärmeverluste zum Kühlmittel zu reduzieren. Möglich ist auch eine Positionierung zu wählen, welche das bzw. die Heizelemente so nah wie möglich zur Hauptölgalerie anordnet, oder direkt an der Hauptölgalerie anordnet, um so Wärmeverluste an die Struktur des Verbrennungsmotors weitgehend reduzieren zu können. Für die Anwendung von Heizelementen in manuellen Getrieben bzw. im Achsgetriebe oder auch die Kombination von Getriebe und Achsgetriebe in einem Gehäuse sind großflächige Heizelemente vorteilhaft, da hier typischerweise kein Ölkreislauf vorhanden ist. In Getrieben bzw. Achsgetrieben und der Kombination von Getriebe und Achsgetriebe mit einem integrierten Ölkreislauf ist es sinnvoll, die Heizelemente direkt in den Ölkreislauf zu integrieren.

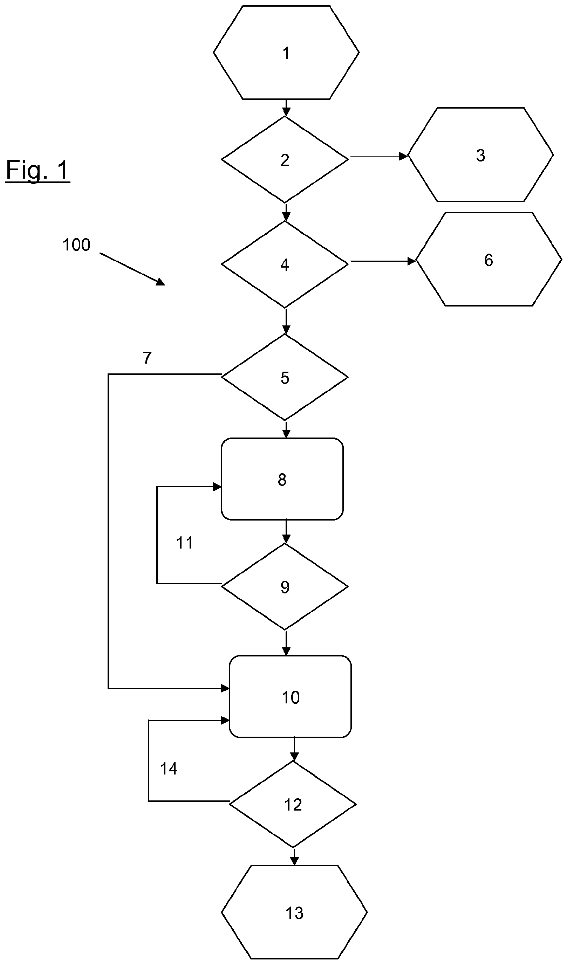

Weiter vorteilhafte Ausgestaltungen sind in den Unteransprüchen und der folgenden Figurenbeschreibung offenbart. Es zeigt die einzige
- Fig. 1: ein Ablaufdiagramm eines beispielhaften Energiemanagementsystems

Mittels zumindest eines Heizelements wird das Betriebsmedium erwärmt, um die Warmlaufphase des Verbrennungsmotors zu verkürzen. In vorteilhafter Ausführung sind mehrere, bevorzugt zwei Heizelemente vorgesehen, welche unterschiedliche Leistungsbeträge haben. Lediglich beispielhaft könnte ein Heizelement eine Leistung von 300 W haben, wobei das andere Heizelement eine Leistung von 700 W aufweisen könnte. Mittels der Heizelemente wird das Betriebsmedium, z. B. das Motoröl in der Warmlaufphase erwärmt, um diese zu verkürzen. Die Heizelemente sind zusätzlich zu den existierenden Stromverbrauchern wie Steuergeräte und Komfortlasten vorgesehen. Natürlich können Heizelemente auch zum Erwärmen des Getriebeöls und/oder der Kühlflüssigkeit vorgesehen sein, um nur einige nicht beschränkende Beispiele zu nennen.

In günstiger Ausgestaltung ist vorgesehen, dass die Heizelemente zur Erwärmung von Öl ausgeführt sind. Insofern können die Heizelemente mittels der zusätzlich frei werdende Energie z. B.: während negativer Beschleunigungsphasen beispielsweise Motoröl und/oder Getriebeöl bzw. Achsgetriebeöl aufwärmen. Zweckmäßig ist, wenn die Heizelemente in dem Ölkreislauf bzw. direkt in dem Ölkreislauf des Verbrennungsmotors integriert sind, um so Wärmeverluste zu reduzieren. Denkbar ist, das Heizelement bzw. die Heizelemente z. B. an einem Ölansaugrohr, an dem Ölpumpengehäuse und/oder an möglichen Ölpassagen zwischen der Ölpumpe, dem Ölfilter, dem Ölkühler und der Hauptölgalerie anzuordnen. In bevorzugter Ausführung kann vorgesehen sein, das bzw. die Heizelemente in Strömungsrichtung des Öls gesehen hinter dem Ölkühler anzuordnen, um Wärmeverluste zum Kühlmittel zu reduzieren. Möglich ist auch eine Positionierung zu wählen, welche das bzw. die Heizelemente so nah wie möglich zur Hauptölgalerie anordnet, oder direkt an der Hauptölgalerie anordnet, um so Wärmeverluste an die Struktur des Verbrennungsmotors weitgehend reduzieren zu können. Für die Anwendung von Heizelementen in manuellen Getrieben bzw. im Achsgetriebe oder auch die Kombination von Getriebe und Achsgetriebe in einem Gehäuse sind großflächige Heizelemente vorteilhaft, da hier typischerweise kein Ölkreislauf vorhanden ist. In Getrieben bzw. Achsgetrieben und der Kombination von Getriebe und Achsgetriebe mit einem integrierten Ölkreislauf ist es sinnvoll, die Heizelemente direkt in den Ölkreislauf zu integrieren.

Die Heizelemente sollen mit Energie bzw. Strom versorgt werden, ohne dass eine negative Energiebilanz bewirkt wird. Hier greift das erfindungsgemäße Energiemanagement ein.

Figur 1 zeigt beispielhaft ein Ablaufdiagramm eines Energiemanagementsystems 100.

Das Energiemanagement beginnt in dem Starblock 1. In dem folgenden Entscheidungsblock 2 wird abgefragt, ob der Ladezustand (SOC) der Batterie genügend ist (Basiswert), um Energie entnehmen zu können. Beispielhaft sei der Ladezustand ausreichend, wenn ein festgelegter Basiswert von z. B. 80% SOC nicht unterschritten wird. Ist der festgelegte Basiswert unterschritten, wird das weitere Vorgehen bei 3 unterbunden, da bei einer Entladung der Batterie die Gefahr bestünde deren Lebensdauer zu reduzieren.

Ist dies nicht der Fall wird zu einem Entscheidungsblock 4 fortgefahren, in dem abgefragt wird, ob eine tatsächliche Betriebsmediumtemperatur, z. B. die Motoröltemperatur unterhalb einem maximalen Grenzwert (maximale Betriebstemperatur; Basiswert) liegt. Der maximale Grenzwert könnte z. B. 90°C betragen. Ist dies der Fall wird zu dem Entscheidungsblock 5 fortgefahren. Ist die tatsächliche Betriebsmediumtemperatur größer oder gleich dem maximalen Grenzwert, wird das weitere Fortgehen bei 6 unterbrochen.

In dem Entscheidungsblock 5 wird ein minimaler Grenzwert der Betriebsmediumtemperatur abgefragt. Dieser könnte z. B. einen Betrag von 40°C aufweisen. Ergibt die Abfrage, dass die tatsächliche Temperatur einen Betrag aufweist, der höher als die minimale Grenztemperatur ist, wird mit 7 fortgefahren, worauf weiter unten eingegangen wird.

Ergibt die Abfrage in dem Entscheidungsblock 5, dass die tatsächliche Betriebsmediumtemperatur unter dem minimalen Grenzwert liegt, wird zu dem Aktivierungsblock 8 fortgefahren.

In dem Aktivierungsblock 8 wird eine aktive Entladung des Energiespeichers bzw. der Batterie bewirkt (erste Phase). Hierbei wird aus dem Energiespeicher bzw. aus der Batterie aktiv Energie entnommen, welche direkt, und nur zu dem zumindest einen Heizelement geleitet wird. Bevorzugter Weise wird in der Warmlaufphase zunächst lediglich das Heizelement mit der geringeren Leistung mit aus dem Energiespeicher entnommener Energie versorgt, wenn der Verbrennungsmotor gestartet ist.

Mit der aktiv aus dem Energiespeicher entnommenen Energie wird das Heizelement betrieben, so dass das Betriebsmedium aufgewärmt wird. Hierzu wird der Batteriestrom auf den Heizelementstrombetrag gesetzt. Nur das Heizelement, und zwar bevorzugt lediglich das Heizelement mit der geringeren Leistung wird so nur aus dem Energiespeicher versorgt, ohne dass z. B. Kraftstoff verbraucht wird, um das Heizelement zu betreiben. Die anderen Stromverbraucher werden über den Generator mit Strom versorgt, da der Verbrennungsmotor den Generator antreibt. Das optional vorgesehene zweite Heizelement mit der höheren Leistung wird in dieser Phase nicht angeschaltet, also weder von dem Generator noch mit Energie aus dem Energiespeicher versorgt.

Es wird festgelegt, dass ein maximaler Grenzwert zu entnehmender Energie aus dem Energiespeicher entnommen werden darf. Dieser maximale Grenzwert zu entnehmender Differenzenergie kann beispielhaft einen Betrag von 3% bezogen auf den SOC beginnend bei der aktiven Entnahme von Energie aus dem Energiespeicher aufweisen. Des Weiteren wird festgelegt, dass die minimale Grenztemperatur des Betriebsmediums zu erreichen ist. Diese kann zum Beispiel, wie oben bereits gesagt, einen Betrag von 40°C aufweisen. Des Weiteren wird festgelegt, dass der SOC des Energiespeichers nicht unter einen bestimmten Betrag gelangen darf, wenn aktiv Energie aus dem Energiespeicher entnommen wird. Beispielhaft kann dieser Grenz-SOC-Betrag, einen Betrag von 70% SOC aufweisen.

Diese Grenzwerte werden in dem sich anschließenden Entscheidungsblock 9 abgefragt. Ergibt die Abfrage, dass ein einziger der oben genannten Grenzwerte erreicht ist, wird zu dem Deaktivierungsblock 10 (zweite Phase) fortgefahren. Andernfalls wird die Schleife bei 11 durchlaufen.

Wird beispielsweise in 9 festgestellt, dass die tatsächliche Betriebsmediumtemperatur ihren minimalen Grenzwert (z. B. 40°C) erreicht hat, wird in dem Deaktivierungsblock 10 die aktive Entnahme von Energie aus dem Energiespeicher unterbrochen, wobei aus dem Energiespeicher weder Energie entnommen wird noch Energie in diesen geladen wird. Liegt allerdings eine Rekuperationsphase vor, wird Energie in dem Energiespeicher geladen.

Beispielhaft wurde ein Differenzenergiebetrag von 1% aus dem Energiespeicher entnommen (Block 8), wobei die minimale Grenztemperatur des Betriebsmediums (z. B. 40°C) bereits erreicht wurde. Dieser entnommene Differenzenergiebetrag wird nun in der Rekuperationsphase der zweiten Phase in den Energiespeicher geladen. Hierzu wird die Generatorspannung in der zweiten Phase außerhalb der Rekuperationsphasen so geregelt, dass sich ein Batteriestrom von NULL (Null Stromregelung) ergibt. Während der Rekuperationsphasen der zweiten Phase wird die Generatorspannung angehoben, wodurch der Energiespeicher geladen wird. Vorteilhaft werden in den Rekuperationsphase die Heizelemente ebenfalls mit Energie versorgt, um die Warmlaufphase weiter zu verkürzen

An den Deaktivierungsblock 10 schließt sich ein Entscheidungsblock 12 an. In dem Entscheidungsblock 12 wird detektiert, ob der aktiv entnommene Differenzenergiebetrag (Aktivierungsblock 8) während der Rekuperationsphase(n) vollständig in den Energiespeicher zurück geladen wurde (ausgeglichener Ladezustand). Es wird auch detektiert, ob die maximale Grenztemperatur des Betriebsmediums (Basiswert, beispielhaft 90°C) erreicht ist. Ist die maximale Betriebsmediumtemperatur erreicht, und ist der entnommene Differenzenergiebetrag vollständig in den Energiespeicher zurück geladen, wird das Energiemanagement 100 bei dem Endblock 13 beendet.

Ist der Differenzenergiebetrag während der Rekuperationsphase(n) nicht vollständig zurück geladen, wird von 12 mit 14 in den Deaktivierungsblock 10 zurück gesprungen. Ist die maximale Grenztemperatur des Betriebmediums (z. B. 90°C) erreicht, wird das zumindest eine Heizelement bzw. werden beide Heizelemente nicht mehr mit Energie versorgt. Ist der Energiedifferenzbetrag in den Energiespeicher noch nicht zurückgeladen, und die maximale Grenztemperatur des Betriebmediums (z. B. 90°C) noch nicht erreicht, wird der Energiespeicher in den Rekuperationsphasen geladen, und die Heizelemente mit Energie versorgt, wobei die Null-Stromregelung eingestellt wird. Ist der Energiedifferenzbetrag in den Energiespeicher zurückgeladen, wobei die maximale Grenztemperatur des Betriebsmediums noch nicht erreicht ist, werden in den Rekuperationsphasen die Heizelemente weiter zugeschaltet, jedoch wird dann zur übergeordneten Ladestrategie geschaltet, die nicht zwangsweise eine NULL Stromregelung sein muß (optionale dritte Phase).

Die Rekuperationsphase ist zeitlich begrenzt. Es kann vorkommen, dass der während der aktiven Energieentnahme (Aktivierungsblock 8) entnommene Differenzenergiebetrag bis zum Ende der Rekuperationsphase noch nicht vollständig in den Energiespeicher geladen ist. Beispielhaft könnte lediglich ein Differenzenergiebetrag von 0,5% während der Rekuperationsphase in den Energiespeicher zurück geladen worden sein. In den sich anschließenden Rekuperationsphasen wird die Generatorspannung daher so erhöht, bis der in der aktiven Entladungsphase entnommene Energiebetrag in den Energiespeicher zurück geladen wurde.

Wird im Entscheidungsblock 5 festgestellt, dass die minimale Grenztemperatur des Betriebsmediums (z. B. 40°C) vorliegt, wird unter Umgehung der Blöcke 8 und 9 direkt mit dem Deaktivierungsblock 10 fortgefahren (siehe 7). Weist das Betriebsmedium die minimale Grenztemperatur auf, kann auf die aktive Entladung des Energiespeichers zur Versorgung des zumindest einen Heizelementes, bevorzugt des Heizelementes mit der geringeren Leistung verzichtet werden. Allerdings wird das bzw. werden die Heizelemente in der bzw. den Rekuperationsphase(n) mit Energie versorgt, um das Betriebsmedium mittels des bzw. der Heizelemente schneller (verkürzen der Warmlaufphase) auf die maximale Grenztemperatur (Basiswert, z. B. 90°C) zu erwärmen. Da keine Energie aktiv (Block 8) aus dem Energiespeicher entnommen wurde, um das Heizelement mit Energie zu versorgen, muß auch keine Energie in der Rekuperationsphase in den Energiespeicher zurückgeladen werden. In der Rekuperationsphase wird das bzw. werden die Heizelemente, ebenso wie die Stromverbraucher direkt über den Generator versorgt.

Mit dem zweckmäßigen Energiemanagement 100 kann so die Aufwärmphase des Verbrennungsmotors reduziert werden, ohne eine negative Energiebilanz zu erhalten, in dem zum Beispiel Kraftstoff verbrannt wird. Denn der aus dem Energiespeicher aktiv entnommene Differenzenergiebetrag wird während der Rekuperationsphase(n) in den Energiespeicher durch Energierückgewinnung zurück geladen.

## Patentansprüche

1. Energiemanagement-Verfahren zur Verkürzung der Warmlaufphase eines Verbrennungsmotors eines Kraftfahrzeuges, wobei das Kraftfahrzeug einen Energiespeicher, und einen Generator sowie Stromverbraucher aufweist, wobei der Generator vom Verbrennungsmotor angetrieben wird und ferner in Rekuperationsphasen kinetische Energie und/oder Bremsenergie des Kraftfahrzeuges in elektrische Energie umwandelt, die in dem Energiespeicher speicherbar ist, wobei zumindest ein Heizelement für Betriebsmedien des Verbrennungsmotors in das Energiemanagement-Verfahren eingebunden ist,
**wobei**
in der Warmlaufphase des Verbrennungsmotors das zumindest eine Heizelement zum Aufwärmen der Betriebsmedien in einer ersten Phase zunächst mit Energie aus dem Energiespeicher versorgt wird, wobei in der ersten Phase ein Differenzbetrag an Energie aus dem Energiespeicher entnommen wird, wobei die erste Phase beendet wird, wenn eine tatsächliche Temperatur der Betriebsmedien einen minimalen Grenzwert der Betriebsmediumtemperatur aufweist, oder wenn ein tatsächlicher Ladezustand des Energiespeichers einen Betrag unterhalb eines festgelegten Grenzwertes aufweist, oder wenn der aktiv aus dem Energiespeicher entnommene Differenzbetrag an Energie einen Betrag oberhalb eines festgelegten Grenzdifferenzenergiebetrages aufweist, wobei sich an die beendete erste Phase eine zweite Phase anschließt, in welcher die aktive Entnahme von Energie aus dem Energiespeicher unterbunden wird, und wobei in während der zweiten Phase auftretenden Rekuperationsphasen die Generatorspannung angehoben wird, und der Energiespeicher geladen wird, bis der aus dem Energiespeicher während der ersten Phase entnommene Differenzbetrag durch die in den Rekuperationsphasen rückgewonnene Energie wieder in den Energiespeicher geladen ist, wobei das zumindest eine Heizelement in der zweiten Phase mit Energie des Generators versorgt wird, wenn die Betriebsmediumtemperatur einen Betrag unterhalb einer maximalen Betriebsmediumtemperatur aufweist, und wobei
der Generator die Stromverbraucher ständig mit Energie versorgt, und wobei das zumindest eine elektrische Heizelement abgeschaltet wird, wenn maximale Grenztemperaturen der Betriebsmedien erreicht sind.

2. Energiemanagement-Verfahren nach Anspruch 1,
**dadurch gekennzeichnet, dass**
der maximal zu entnehmende Differenzbetrag zur Versorgung des zumindest einen Heizelementes in der Warmlaufphase des Verbrennungsmotors auf einen maximalen Grenzwert festgelegt wird.

3. Energiemanagement-Verfahren nach einem der vorhergehenden Ansprüche,
**dadurch gekennzeichnet, dass**
das mehrere Heizelemente zum Erwärmen eines definierten Betriebsmediums vorgesehen sind, welche eine jeweils unterschiedliche Leistung aufweisen, wobei das Heizelement mit der höheren Leistung nur in Rekuperationsphasen mit Energie versorgt wird.

4. Energiemanagement-Verfahren nach einem der vorhergehenden Ansprüche,
**dadurch gekennzeichnet, dass**
die Generatorspannung in der zweiten Phase außerhalb der Rekuperationsphasen so geregelt wird, dass der Energiespeicherstrom zu NULL wird.

5. Energiemanagement-Verfahren nach einem der vorhergehenden Ansprüche,
**dadurch gekennzeichnet, dass**
das zumindest eine Heizelement in einem Ölkreislauf des Verbrennungsmotors und/oder in einem Ölkreislauf eines Getriebes und/oder in einem Getriebe bzw. Achsgetriebe bzw. einer Kombination von Getriebe und Achsgetriebe in einem Gehäuse integriert ist.

## Claims

1. Energy management method for shortening the warm-up phase of an internal combustion engine of a motor vehicle, wherein the motor vehicle has an energy store and a generator and also current consumers, with the generator being driven by the internal combustion engine and also converting kinetic energy and/or braking energy of the motor vehicle into electrical energy in recuperation phases, which electrical energy can be stored in the energy store, wherein at least one heating element for operating fluids of the internal combustion engine is incorporated into the energy management method,
wherein
in the warm-up phase of the internal combustion engine the at least one heating element for heating the operating fluids in a first phase is initially supplied with energy from the energy store;
wherein in the first phase a differential amount of energy is retrieved from the energy store, wherein the first phase is terminated when an actual temperature of the operating fluids has a minimum limit value of the operating fluid temperature, or when an actual charging state of the energy store has value below an established limit value, or when the differential amount of energy that is actively retrieved from the energy store is above an established limit differential amount of energy;
wherein a second phase follows the terminated first phase, in which second phase the active retrieval of energy from the energy store is suppressed, and wherein the generator voltage is increased in recuperation phases that arise during the second phase, and the energy store is charged until the differential amount that has been retrieved from the energy store during the first phase has been recharged into the energy store by way of the energy that has been recuperated in the recuperation phases, wherein the at least one heating element in the second phase is supplied with energy from the generator when the operating fluid temperature has a value below a maximum operating fluid temperature, and
wherein the generator permanently supplies the current consumer with energy, and wherein the at least one electric heating element is switched off when maximum limit temperatures of the operating fluids are reached.

2. Energy management method according to Claim 1, **characterized in that**
the maximum differential amount to be extracted for supplying the at least one heating element in the warm-up phase of the internal combustion engine is fixed at a maximum limit value.

3. Energy management method according to one of the preceding claims,
**characterized in that**
a plurality of heating elements are provided for heating a defined operating fluid, which heating elements in each case have a different power, with the heating element with the higher power being supplied with energy only in recuperation phases.

4. Energy management method according to one of the preceding claims,
**characterized in that**
in the second phase outside the recuperation phases, the generator voltage is regulated such that the energy store current is reduced to ZERO.

5. Energy management method according to one of the preceding claims,
**characterized in that**
the at least one heating element is integrated in an oil circuit of the internal combustion engine and/or in an oil circuit of a transmission and/or in a transmission or axle gear or combination of a transmission and an axle gear in one housing.

## Revendications

1. Procédé de gestion d'énergie destiné à raccourcir la phase de réchauffement d'un moteur à combustion interne d'un véhicule automobile, le véhicule automobile possédant un accumulateur d'énergie et un générateur ainsi que des consommateurs électriques, le générateur étant entraîné par le moteur à combustion interne et convertissant en outre, dans des phases de récupération, de l'énergie cinétique et/ou de l'énergie de freinage du véhicule automobile en énergie électrique qui peut être stockée dans l'accumulateur d'énergie, au moins un élément chauffant pour des fluides opérationnels du moteur à combustion interne étant inclus dans le procédé de gestion d'énergie,
procédé selon lequel,
dans la phase de réchauffement du moteur à combustion interne, l'au moins un élément chauffant est tout d'abord, dans une première phase, alimenté en énergie depuis l'accumulateur d'énergie en vue de réchauffer les fluides opérationnels,
un montant différentiel d'énergie étant prélevé de l'accumulateur d'énergie dans la première phase, la première phase prenant fin lorsqu'une température effective des fluides opérationnels présente une valeur limite minimale de la température de fluide opérationnel, ou lorsqu'un état de charge effectif de l'accumulateur d'énergie présente un montant inférieur à une valeur limite fixée, ou lorsque le montant différentiel d'énergie prélevé activement de l'accumulateur d'énergie présente un montant supérieur à un montant différentiel d'énergie limite fixé,
une deuxième phase se rattachant à la première phase qui se termine, dans laquelle le prélèvement actif d'énergie de l'accumulateur d'énergie est inhibé et, dans les phases de récupération qui se produisent pendant la deuxième phase, la tension du générateur étant relevée et l'accumulateur d'énergie étant chargé jusqu'à ce que le montant différentiel prélevé de l'accumulateur d'énergie pendant la première phase soit de nouveau chargé dans l'accumulateur d'énergie par l'énergie récupérée dans les phases de récupération, l'au moins un élément chauffant étant, dans la deuxième phase, alimenté avec de l'énergie du générateur lorsque la température de fluide opérationnel présente un montant inférieur à une température de fluide opérationnel maximale et
le générateur alimentant constamment les consommateurs électriques en énergie et l'au moins un élément chauffant électrique étant mis hors circuit lorsque les températures limites maximales des fluides opérationnels sont atteintes.

2. Procédé de gestion d'énergie selon la revendication 1, **caractérisé en ce que** le montant différentiel maximal à prélever en vue de l'alimentation de l'au moins un élément chauffant dans la phase de réchauffement du moteur à combustion interne est fixé à une valeur limite maximale.

3. Procédé de gestion d'énergie selon l'une des revendications précédentes, **caractérisé en ce que** plusieurs éléments chauffants sont présents pour réchauffer un fluide opérationnel défini, lesquels possèdent respectivement une puissance différente, l'élément chauffant ayant la puissance la plus élevée n'étant alimenté en énergie que dans les phases de récupération.

4. Procédé de gestion d'énergie selon l'une des revendications précédentes, **caractérisé en ce que** la tension de générateur dans la deuxième phase en-dehors des phases de récupération est régulée de telle sorte que le courant de l'accumulateur d'énergie devient nul.

5. Procédé de gestion d'énergie selon l'une des revendications précédentes, **caractérisé en ce que** l'au moins un élément chauffant est intégré dans un circuit d'huile du moteur à combustion interne et/ou dans un circuit d'huile d'une boîte de vitesses et/ou dans une boîte de vitesses ou une transmission d'essieu ou une combinaison de boîte de vitesses et de transmission d'essieu dans un carter.
